# EUROPÄISCHE PATENTSCHRIFT

(11) **EP 2 346 717 B1**
(45) Veröffentlichungstag und Bekanntmachung des Hinweises auf die Patenterteilung: **25.05.2016**
(21) Anmeldenummer: 09759648.0
(22) Anmeldetag: 06.10.2009
(51) Int. Cl.: B60N 2/48

(54) **CRASHAKTIVE KOPFSTÜTZE MIT EINEM SPERRENDEN DRUCKKNOPF**
CRASH-ACTIVE HEADREST WITH A LOCKING BUTTON
APPUI-TETE ACTIF EN CAS DE CHOC AVEC UN BOUTON DE VERROUILLAGE

(30) Priorität: 17.11.2008 DE 102008057792
(43) Veröffentlichungstag der Anmeldung: 27.07.2011
(73) Patentinhaber: Johnson Controls GmbH, 51399 Burscheid (DE)
(72) Erfinder: SCHMITZ, Andreas, 51399 Burscheid (DE)
(74) Vertreter: Wolff, Felix
(86) Internationale Anmeldenummer: PCT/EP2009/007155
(87) Internationale Veröffentlichungsnummer: WO 2010/054723

(56) Entgegenhaltungen:
- WO-A1-2009/074340
- DE-B3-102006 001 143
- DE-B3-102007 041 496

## Beschreibung

Die vorliegende Erfindung betrifft eine crashaktive-Kopfstütze eines Kraftfahrzeugsitzes mit einem Kopfteil, das zumindest teilweise zu Komfort- und/oder Sicherheitszwecken in Richtung des Kopfes eines Sitzinsassen bewegbar und in dieser Stellung mit einem Form-und/oder Kraftschlussmittel verrastbar ist, wobei sie ein Mittel aufweist, das das Form-und/oder Kraftschlussmittel von einer verriegelnden in eine entriegelnde Position überführt.
Crashaktive-Kopfstützen sind aus dem Stand der Technik beispielsweise der DE 10 2006 001 143 B3, der DE 103 254 472, der WO 2004/ 056 606, der WO 2005/ 097 545 sowie der DE 103 55 773 bekannt. Diese Kopfstützen sind zu Komfort-und/oder Sicherheitszwecken von einer von dem Kopf des Fahrzeuginsassen vergleichsweise weit entfernten Position in Richtung des Kopfs des Sitzinsassen bewegbar und dort verrastbar vorgesehen. Insbesondere in Komfortstellungen ist es jedoch in der Vergangenheit vorgekommen, dass sich die Kopfstütze selbsttätig in Richtung des Kopfs des Sitzinsassen bewegt hat.
Es war deshalb die Aufgabe der vorliegenden Erfindung eine crashaktive-Kopfstütze zur Verfügung zu stellen, die die Nachteile des Standes der Technik nicht aufweist.
Gelöst wird die Aufgabe mit einer crashaktiven-Kopfstütze eines Kraftfahrzeugsitzes mit einem Kopfteil, das zumindest teilweise zu Komfort- und/oder Sicherheitszwecken in Richtung des Kopfes eines Sitzinsassen bewegbar und in dieser Stellung mit einem Form-und/oder Kraftschlussmittel verrastbar ist, wobei sie ein Mittel aufweist, das das Form-und/oder Kraftschlussmittel von einer verriegelnden in eine entriegelnde Position überführt und das Mittel eine ungewollte Entriegelung des Form-und/oder Kraftschlussmittels verhindert.

Die vorliegende Erfindung betrifft eine crashaktive-Kopfstütze insbesondere eine crashaktive-Kopfstütze wie sie beispielsweise in der WO 2005/ 097 545 beschrieben ist, die hiermit als Referenz eingeführt wird und somit als Teil der Offenbarung gilt.
Die crashaktiven-Kopfstützen sind Teil eines Fahrzeugsitzes oder einer Fahrzeugsitzbank und weisen ein Kopfteil auf, dass zu Komfort-und/oder

Sicherheitszwecken zumindest teilweise in Richtung des Kopf des Insassen bewegbar ist. Die Komfortverstellung ermöglicht es, dass die Kopfstütze dem Kopf des Sitzinsassen beispielsweise bei der Fahrt Halt bietet. Die Sicherheitsverstellung der Kopfstütze erfolgt bei einem Heckaufprall um Verletzungen des Kopfes, des Halses, des Nackens und/oder des Rückens des Fahrzeuginsassen zu vermeiden. Dafür bewegt sich die Kopfstütze im Fall eines Heckaufpralls ruckartig in Richtung des Kopfes des Insassen. Sowohl bei der Komfort- als auch bei der Sicherheitsverstellung ist der verstellte Teil der Kopfstütze in der ausgefahrenen Stellung verrastbar, um dem Fahrzeuginsassen einen festen Halt für seinen Kopf zu bieten sowie um bei einem Heckaufprall zu vermeiden, dass die Kopfstütze beim Aufprall des Kopfes nachgibt. Dafür weist die erfindungsgemäße Kopfstütze ein Form-und/oder Kraftschlussmittel auf, dass den beweglichen Teil der Kopfstütze oder die Kopfstütze in der jeweils gewünschten Position verrastet. Um die Komfortstellung verändern zu können und/oder um nach einem Unfall die Kopfstütze wieder in Ihre ursprüngliche Stellung verbringen zu können, muss dieses Form-und/oder Kraftschlussmittel lösbar vorgesehen sein. Dafür weist die erfindungsgemäße Kopfstütze ein Mittel auf, dass das Form und/oder Kraftschlussmittel entriegelt. Dieses Mittel ist nun erfindungsgemäß so vorgesehen, das es nicht nur in der Lage ist das Form und/oder Kraftschlussmittel zu riegeln sondern auch in seiner verriegelnden Position zu fixieren, so dass eine ungewollte Feststellung der Kopfstütze oder Teile der Kopfstütze sicher vermieden wird. Es handelt sich folglich um ein kombiniertes Entriegelungs-/Sicherungsmittel.
Vorzugsweise ist das Form und/oder Kraftschlussmittel und/oder das Entriegelungs-/Sicherungsmittel in die verriegelnde Position vorgespannt.
Vorzugsweise handelt es sich bei dem Entriegelungs-/Sicherungsmittel um ein Druckelement, vorzugsweise einen Druckknopf.

Vorzugsweise ist die Wirkrichtung des Entriegelungs-/Sicherungsmittels senkrecht zur Entriegelungsrichtung des Form und/oder Kraftschlussmittels angeordnet.
Vorzugsweise weist das Entriegelungs-/Sicherungsmittel eine erste Anlagefläche auf, die entriegelnd mit dem Form und/oder Kraftschlussmittel zusammenwirkt.

Besonders bevorzugt wirkt diese Anlagefläche mit einer ersten Antriebsfläche des Form-und/oder Kraftschlussmittels zusammen.
Weiterhin bevorzugt weist das Entriegelungs-/Sicherungsmittel eine zweite Anlagefläche auf, die das Form-und/oder Kraftschlussmittel in seiner verriegelnden Position sichert. Besonders bevorzugt wirkt diese Anlagefläche mit einer ersten Sicherungsfläche des Form-und/oder Kraftschlussmittels zusammen.
In einer anderen bevorzugten Ausführungsform sind die Anlageflächen des Entriegelungs-/Sicherungsmittel in Form einer Kulisse in dem Form und/ oder Kraftschlussmittel realisiert. Bei diese bevorzugten Ausführungsform weist dann das Entriegelungs-/ Sicherungsmittel vorzugsweise einen Vorsprung auf, der in der Kulisse geführt ist.
Vorzugsweise wechselt die Wirkweise des Entriegelungs-/Sicherungsmittels durch dessen Lageveränderung. In einer Stellung wirkt es sichernd, in einer anderen Stellung wirkt es entriegelnd.s
Im folgenden wird die Erfindung anhand der Figuren 1 bis 3 erläutert. Diese Erläuterungen sind lediglich beispielhaft und schränken den allgemeinen Erfindungsgedanken nicht ein.
- **Figur 1**: zeigt eine Ausführungsform der crashaktiven-Kopfstütze.
- **Figuren 2a und b**: zeigen eine erste Ausführungsform des Form- und/oder Kraftschlussmittels und des Entriegelungs-/Sicherungsmittels.
- **Figuren 3a bis 3b**: zeigen eine weitere Ausführungsform des Form- und /oder Kraftschlussmittels und des Entriegelungs-/Sicherungsmittlels.

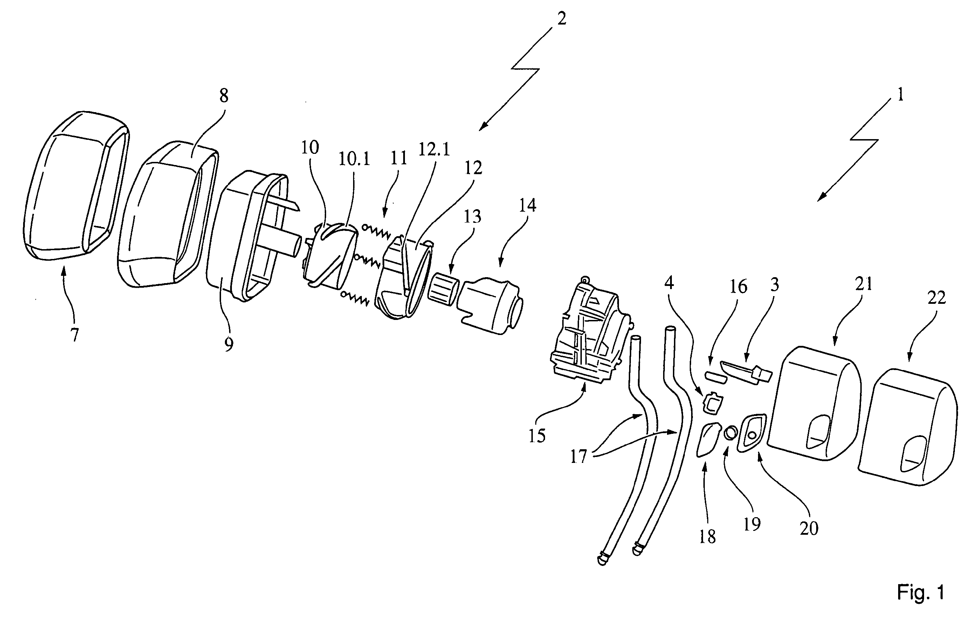

Figur 1 zeigt eine Ausführungsform der crashaktiven-Kopfstütze wie sie im Wesentlichen aus der WO 2005/ 097 545 bekannt ist, so dass die dort gemachte Beschreibung als Ergänzung dienen soll und diese Druckschrift als Referenz in die vorliegende Anmeldung eingeführt wird und somit als Teil der Offenbarung gilt. Die crashaktive-Kopfstütze 1 ist mittels Bügel 17 an dem Sitzteil eines Fahrzeugsitzes oder einer Fahrzeugsitzbank (beides nicht dargestellt) angeordnet. Sie weist auf Ihrer dem Sitzinsassen zugewandten Seite eine Platte 9 auf, die von einem Polster 8 und einem Bezug 7 abgedeckt wird. An dieser Platte 9 ist drehbar ein erstes Drehteil 10 gelagert, das die Flanken 10.1 aufweist. Dieses Drehteil wirkt mit einem zweiten Teil 12, das Ortsfest in dem Gehäuse 15 gelagert ist zusammen. Der zweite Teil 12 weist ebenfalls Flanken 12.1 auf, die mit den Flanken 10.1 des ersten Drehteils zusammenwirkt. Zwischen den beiden Teilen 10,2 befinden sich Federn 11, die sich an dem Drehteil 10 und an dem Teil 12 jeweils abstützen und die komprimiert sind. Durch eine Drehung des Drehteils 10 relativ zu dem ortsfesten Teil 12, bei der sich die Flanken 10.1 entlang der Flanken 12.1 bewegen, vollführt das Drehteil 10 eine translatorische Bewegung, das die Platte 9 zu dem Kopf des Sitzinsassen hin oder von dem Kopf des Fahrzeuginsassen wegbewegt. Diese Bewegung wird durch die Federn 11 unterstützt bzw. abgebremst, die sich bei der Bewegung zum Kopf des Sitzinsassen hin entspannen und bei einer Bewegung vom Kopf des Insassen weg gespannt werden. Mittels dieser Mimik kann sowohl eine Komfortverstellung der Platte 9 als auch eine Sicherheitsverstellung erfolgen. Zwischen dem Lager 9 und dem Drehteil 10 ist ein Kugellager 13 angeordnet. Die Drehung des ersten Drehteils 10 wird durch eine ebenfalls vorgespannte Drehscheibe 10 induziert, deren linkes Teil mit dem Drehteil 10 zusammenwirkt und die sich mit ihrem rechten Teil an dem Gehäuse 15 abstützt. Die jeweilige Drehstellung dieses Drehteils 14 wird durch das Form-und/oder Kraftschlussmittel 3, hier ein Hebel, gesichert, indem dieser Hebel 3 zwischen Zähne (nicht dargestellt) form- und/oder kraftschlüssig eingreift und in seiner verriegelten Stellung verhindert, dass sich die Drehscheibe zumindest in einer Drehrichtung weiterdreht. Normalerweise wird lediglich die Drehrichtung gesichert, die die Platte 9 weiter in Richtung des Fahrzeuginsassen bewegt, weil in umgekehrter Drehrichtung eine Verstellung durch die Federn 11 beziehungsweise die in der Drehscheibe 14 vorhandene Torsionsfeder erschwert wird. Dieser Hebel 3 ist mittels einer Feder 16 in seine verriegelnde Stellung vorgespannt. Der Hebel 3 kann mittels eines Entriegelungsmittels 4 entriegelt d. h. außerhalb der an der Drehscheibe 14 angeordneten Zähne gebracht werden. Dies erfolgt durch einen Druckknopf 18, der in einem Gehäuse 20 angeordnet ist. Der Druckknopf 20 ist entgegen der Druckrichtung vorgespannt. An seinem rückwärtigen Ende weist die erfindungsgemäße Kopfstützte eine rückseitige Abdeckung 21 und einen Bezug 22 auf.

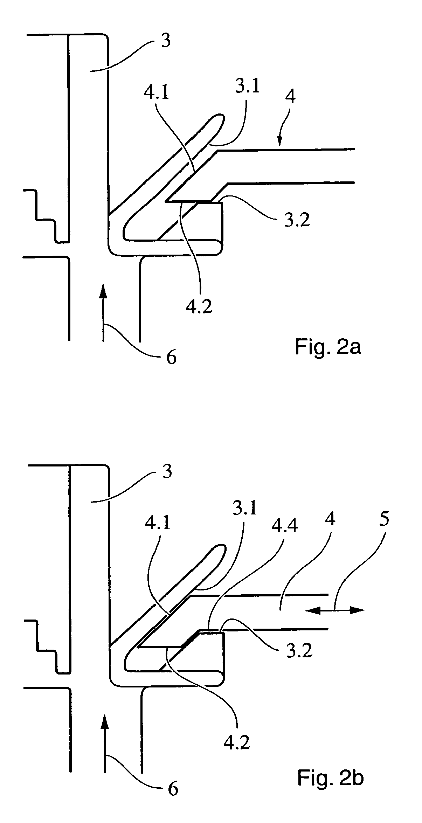

Figuren 2 a und 2b zeigen nun eine erste Ausführungsform des Hebels 3 beziehungswiese des Entriegelungs-Sicherungsmittels 4. Die Entriegelungsrichtung des Hebels 3 ist durch den Pfeil 6 dargestellt. An den Hebel 3 ist eine schräg zur Entriegelungsrichtung 6 stehende Antriebsfläche 3.1 angeordnet, hier angeformt. Ebenfalls angeordnet/ angefomt an den Hebel 3 ist eine Sicherungsfläche 3.2. Das Entriegelungs-/Sicherungsmittel im folgenden als Druckknopf bezeichnet weist eine erste zu dem Antriebsmittel 3.1 korrespondierende Anlagefläche 4. 1 und eine zweite zu der Sicherungsfläche 3.2 korrespondierende Anlagefläche 4.2 auf. Figur 2a zeigt den Druckknopf in seiner sichernden Stellung, die verhindert, dass der Hebel 3 selbsttätig ungewollt seine entriegelnde Stellung einnimmt. In diesem Fall wirkt die Sicherungsfläche 3.2 des Hebels 3 mit der zweiten Anlagefläche 4.2 so zusammen, dass sich der Hebel 3 nicht in die durch den Pfeil 6 symbolisierte Richtung bewegen kann.
In Figur 2 b ist der Druckknopf 4 in seine entriegelnde Stellung verbracht worden, d. h. er ist von rechts nach links wie durch den Pfeil 5 symbolisiert, verschoben worden. Der Fachmann versteht, dass der Hebel 4 dabei seine horizontale Ausrichtung beibehält. Dadurch sind nun die Flächen 3.1 und 4.1 im Eingriff miteinander und der Hebel 3 kann in die entriegelte Stellung überführt werden. Dabei kann die Fläche 4.1 antreibend wirken. Die Sicherungsfläche 3.2 des Hebels 3 verhindert in dieser Stellung nicht mehr eine Entriegelungsbewegung 6 des Hebels 3. Sie begrenzt jedoch die Bewegung des Hebels 3, indem sie nach der vollführten Entriegelung mit der Anlagefläche 4.4 in Anlage gelangt. Wird der Druckknopf wieder losgelassen, bewegt er sich von links nach rechts und der Hebel 3 nimmt wieder seine gesicherte Stellung ein.

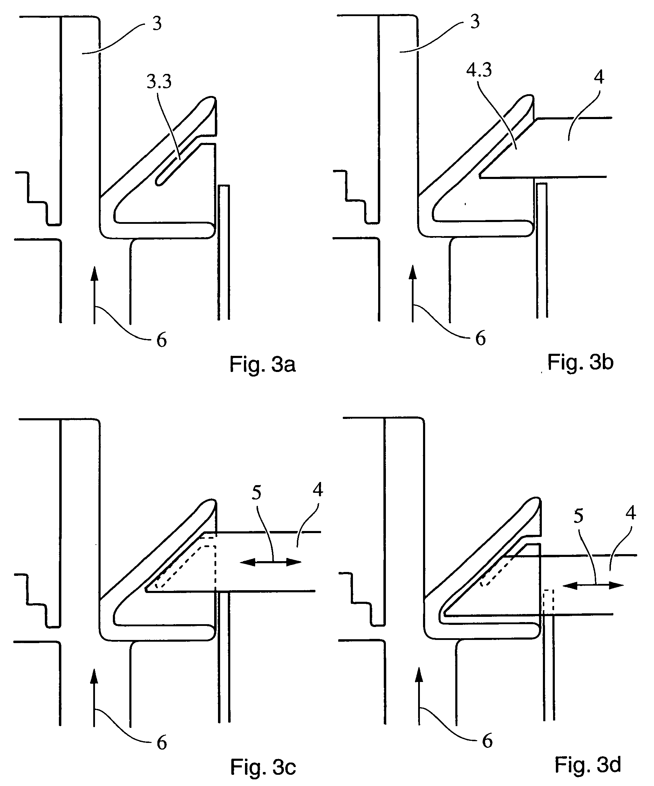

Figuren 3a - 3d zeigen eine weitere Ausführungsform des Hebels 3 bzw. des Druckknopfes 4. In dem vorliegenden Fall ist der Hebel 3 mit einer Kulisse 3.3 versehen. Wie in Figur 3 b zu sehen ist, weist der Druckknopf 4 bei diesem Ausführungsbeispiel einen Vorsprung, beispielsweise einen Pin 4.3 auf, der in die Kulisse 3.3 eingreift. Durch das Eingreifen des Pins 4.3 in die Kulisse 3.3, verhindert der Druckknopf 4, dass der Hebel 3.3 ungewollt entsichert wird ( Figur 3b). Wird der Druckknopf 4 nun wie in den Figuren 3 c und d dargestellt von rechts nach links bewegt, wird der Hebel in die durch den Pfeil 6 symbolisierte Richtung nach oben gedrückt. Der Fachmann versteht, dass der Hebel 4 dabei seine horizontale Ausrichtung beibehält. Wird der Druckknopf wieder losgelassen, bewegt er sich von links nach rechts und der Hebel 3 nimmt wieder seine gesicherte Stellung ein.

### Bezugszeichenliste:

- 1: Crashaktive-Kopfstütze
- 2: Kopfteil
- 3: Form-und/oder Kraftschlussmittel, Hebel
- 3.1: erste Anlagefläche, Antriebsfläche
- 3.2: zweite Anlagefläche, Sicherungsfläche
- 3.3: Kulisse
- 4: Mittel, Entriegelungsmittel, Sicherungsmittel
- 4.1: erste Anlagefläche
- 4.2: zweite Anlagefläche
- 4.3: Vorsprung
- 4.4: Anlagefläche
- 5: Wirkrichtung des Mittels 4
- 6: Entriegelungsrichtung
- 7: Bezug der Kopfstütze
- 8: Polster, Schaum
- 9: Platte
- 10: erstes Drehteil
- 10.1: Flanken
- 11: Antriebsmittel, Federn
- 12: zweitem Teil
- 12.1: Flanken
- 13: Kugellager
- 14: Drehscheibe
- 15: Gehäuse
- 16: Feder des Hebels 4
- 17: Haltebügel
- 18: Druckknopf
- 19: Feder des Druckknopfs
- 20: Gehäuse
- 21: Rückseitige Abdeckung
- 22: Bezug

## Patentansprüche

1. Crashaktive-Kopfstütze (1) eines Kraftfahrzeugsitzes mit einem Kopfteil (2), das zumindest teilweise zu Komfort- und/oder Sicherheitszwecken in Richtung des Kopfes eines Sitzinsassen bewegbar und in dieser Stellung mit einem Form-und/oder Kraftschlussmittel (3) verrastbar ist, **dadurch gekennzeichnet, dass** sie ein Mittel (4) aufweist, das das Form-und/oder Kraftschlussmittel (3) von einer verriegelnden in eine entriegelnde Position überführt, wobei Mittel (4) eine ungewollte Entriegelung des Form-und/oder Kraftschlussmittels (3) verhindert.

2. Crashaktive-Kopfstütze (1) nach Anspruch 1, **dadurch gekennzeichnet, dass** das Form-und/oder Kraftschlussmittel (3) und/oder das Mittel (4) in die verriegelnde Position vorgespannt ist.

3. Crashaktive-Kopfstütze (1) nach einem der voranstehenden Ansprüche, **dadurch gekennzeichnet, dass** das Mittel (4) ein Druckelement, vorzugsweise ein Druckkopf ist.

4. Crashaktive-Kopfstütze (1) nach einem der voranstehenden Ansprüche, **dadurch gekennzeichnet, dass** die Wirkrichtung (5) des Mittels (4) senkrecht zur Entriegelungsrichtung (6) angeordnet ist.

5. Crashaktive-Kopfstütze (1) nach einem der voranstehenden Ansprüche, **dadurch gekennzeichnet, dass** das Mittel (4) eine erste Anlagefläche (4.1) aufweist, die entriegelnd mit dem Form-und/oder Kraftschlussmittel (3) zusammenwirkt.

6. Crashaktive Kopfstütze nach Anspruch 5, **dadurch gekennzeichnet, dass** die Anlagefläche (4.1) mit einer ersten Antriebfläche (3.1) des Form-und/oder Kraftschlussmittels (3) zusammenwirkt.

7. Crashaktive-Kopfstütze (1) nach einem der voranstehenden Ansprüche, **dadurch gekennzeichnet, dass** das Mittel (4) eine zweite Anlagefläche aufweist, die das Form-und/oder Kraftschlussmittel (3) in seiner verriegelnden Position sichert.

8. Crashaktive Kopfstütze nach Anspruch 7, **dadurch gekennzeichnet, dass** die Anlagefläche (4.2) mit einer ersten Sicherungsfläche (3.2) des Form-und/oder Kraftschlussmittels (3) zusammenwirkt.

9. Crashaktive-Kopfstütze (1) nach einem der Ansprüche 6 oder 8, **dadurch gekennzeichnet, dass** die Anlageflächen (3.1, 3.2) Teil einer Kulisse (3.3) sind.

10. Crashaktive-Kopfstütze (1) nach Anspruch 9, **dadurch gekennzeichnet, dass** das Mittel (4) einen Vorsprung aufweist, der in der Kulisse (3.3) geführt ist.

11. Crashaktive-Kopfstütze (1) nach einem der Ansprüche 5 - 9, **dadurch gekennzeichnet, dass** die Wirkweise des Mittels (4) durch eine Lageveränderung wechselt.

## Claims

1. Crash-active headrest (1) of a motor vehicle seat having a head part (2) which is at least partially displaceable in the direction of the head of a seat occupant for comfort and/or safety purposes and may be locked in said position by a positive and/or non-positive connection means (3), **characterized in that** said headrest comprises a means (4) which transfers the positive and/or non-positive connection means (3) from a locked position into an unlocked position, wherein the means (4) prevents inadvertent unlocking of the positive and/or non-positive connection means (3).

2. Crash-active headrest (1) according to Claim 1, **characterized in that** the positive and/or non-positive connection means (3) and/or the means (4) are pretensioned in the locked position.

3. Crash-active headrest (1) according to one of the preceding claims, **characterized in that** the means (4) is a push element, preferably a push button.

4. Crash-active headrest (1) according to one of the preceding claims, **characterized in that** the operational direction (5) of the means (4) is arranged perpendicular to the unlocking direction (6).

5. Crash-active headrest (1) according to one of the preceding claims, **characterized in that** the means (4) has a first bearing surface (4.1) which cooperates in an unlocking manner with the positive and/or non-positive connection means (3).

6. Crash-active headrest according to Claim 5, **characterized in that** the bearing surface (4.1) cooperates with a first drive surface (3.1) of the positive and/or non-positive connection means (3).

7. Crash-active headrest (1) according to one of the preceding claims, **characterized in that** the means (4) comprises a second bearing surface which locks the positive and/or non-positive connection means (3) in its locked position.

8. Crash-active headrest according to Claim 7, **characterized in that** the bearing surface (4.2) cooperates with a first locking surface (3.2) of the positive and/or non-positive connection means (3).

9. Crash-active headrest (1) according to one of Claims 6 or 8, **characterized in that** the bearing surfaces (3.1, 3.2) are part of a slotted guide (3.3).

10. Crash-active headrest (1) according to Claim 9, **characterized in that** the means (4) comprises a projection which is guided in the slotted guide (3.3).

11. Crash-active headrest (1) according to one of Claims 5-9, **characterized in that** the mode of operation of the means (4) changes as a result of altering the position.

## Revendications

1. Appui-tête actif en cas de collision (1) pour un siège de véhicule automobile, comprenant une partie de tête (2) qui peut être déplacée au moins en partie à des fins de confort et/ou de sécurité dans la direction de la tête d'un occupant du siège et qui peut être encliquetée dans cette position avec un moyen d'engagement par correspondance de formes et/ou par force (3), **caractérisé en ce qu'**il présente un moyen (4) qui transfère le moyen d'engagement par correspondance de formes et/ou par force (3) d'une position de verrouillage dans une position déverrouillée, le moyen (4) empêchant un déverrouillage indésirable du moyen d'engagement par correspondance de formes et/ou par force (3).

2. Appui-tête actif en cas de collision (1) selon la revendication 1, **caractérisé en ce que** le moyen d'engagement par correspondance de formes et/ou par force (3) et/ou le moyen (4) sont précontraints dans la position de verrouillage.

3. Appui-tête actif en cas de collision (1) selon l'une quelconque des revendications précédentes, **caractérisé en ce que** le moyen (4) est un élément de pression, de préférence un bouton-pression.

4. Appui-tête actif en cas de collision (1) selon l'une quelconque des revendications précédentes, **caractérisé en ce que** la direction d'action (5) du moyen (4) est perpendiculaire à la direction de déverrouillage (6).

5. Appui-tête actif en cas de collision (1) selon l'une quelconque des revendications précédentes, **caractérisé en ce que** le moyen (4) présente une première surface d'appui (4.1) qui coopère avec le moyen d'engagement par correspondance de formes et/ou par force (3) en vue du déverrouillage.

6. Appui-tête actif en cas de collision selon la revendication 5, **caractérisé en ce que** la surface d'appui (4.1) coopère avec une première surface d'entraînement (3.1) du moyen d'engagement par correspondance de formes et/ou par force (3).

7. Appui-tête actif en cas de collision (1) selon l'une quelconque des revendications précédentes, **caractérisé en ce que** le moyen (4) présente une deuxième surface d'appui qui fixe le moyen d'engagement par correspondance de formes et/ou par force (3) dans sa position de verrouillage.

8. Appui-tête actif en cas de collision selon la revendication 7, **caractérisé en ce que** la surface d'appui (4.2) coopère avec une première surface de fixation (3.2) du moyen d'engagement par correspondance de formes et/ou par force (3).

9. Appui-tête actif en cas de collision (1) selon l'une quelconque des revendications 6 ou 8, **caractérisé en ce que** les surfaces d'appui (3.1, 3.2) font partie d'une coulisse (3.3).

10. Appui-tête actif en cas de collision (1) selon la revendication 9, **caractérisé en ce que** le moyen (4) présente une saillie qui est guidée dans la coulisse (3.3).

11. Appui-tête actif en cas de collision (1) selon l'une quelconque des revendications 5 à 9, **caractérisé en ce que** le fonctionnement du moyen (4) change par le biais d'un changement de position.
